# EUROPEAN PATENT SPECIFICATION

(11) **EP 0 436 257 B1**
(45) Date of publication and mention of the grant of the patent: **14.09.1994**
(21) Application number: 90250319.2
(22) Date of filing: 20.12.1990
(51) Int. Cl.: A01N 65/00

(54) **Method for controlling fungi on plants by the aid of a hydrophobic extracted neem oil**
Methode zur Bekämpfung von Pilzen auf Pflanzen mit Hilfe von hydrophobisch extrahiertem Neemöl
Méthode pour combattre les champignons aux plants avec d' huile de margousier extraite hydrophobement

(30) Priority: 26.12.1989 US 456762
(43) Date of publication of application: 10.07.1991
(73) Proprietor: W.R. Grace & Co.-Conn., New York, New York 10036 (US); THE UNITED STATES OF AMERICA as represented by THE SECRETARY OF AGRICULTURE, Washington, DC 20250 (US)
(72) Inventor: Locke, James Charles, Silver Spring, Md. 20904 (US); Larew, Hiram Gordon III, Hyattsville, Md. 20783 (US); Walter, James Frederic, Ashton, Md. 20861 (US)
(74) Representative: UEXKÜLL & STOLBERG

(56) References cited:
- DE-A- 3 912 059
- US-A- 4 556 562
- ENTOMOLOGIA EXPERIMENTALIS ET APPLICATA, vol. 24, no. 3, 1978, pages 448-457; M. JACOBSON et al.: "Chemistry and biological activity of insect feeding deterrents from certain weed and crop plants"
- PHYTOPARASITICA, vol. 11, no. 3/4, 1983, pages 177-185; F.A. MANSOUR et al.: "Effects of neem (Azadirachta indica) seed kernel extracts from different solvents on the carmine spider mite, Tetranychus cinnabarinus"
- PHYTOPARASITICA, vol. 15, no. 2, 1987, pages 125-130; F. MANSOUR et al.: "Effects of neem (Azadirachta indica) seed kernel extracts from different solvents on the predacious mite Phytoseiulus persimilis and the phytophagous mite Tetranychus cinnabarinus"
- PHYTOPARASITICA, vol. 14, no. 1, 1986, pages 73-76; F.A. MANSOUR et al.: "Toxicity of neem (Azadirachta indica) seed kernel extracts prepared with different solvents, on the spider Chiracanthium mildei"
- CHEMICAL ABSTRACTS, vol. 103, no. 23, 9th December 1985, page 242, abstract no. 19142r, Columbus, Ohio, US; F.A. MANSOUR et al.: "Effects of neem (Azadirachta indica) seed kernel extracts from different solvents on the carmine spidermite, Tetranychus cinnabarinus"
- JOURNAL OF ECONOMIC ENTOMOLOGY, vol. 71, no. 5, October 1978, pages 810-813; T.L. LADD, Jr. et al.: "Japanese beetles: Extracts from neem tree seeds as feeding deterrents"
- CHEMICAL ABSTRACTS, vol. 94, no. 5, 2nd February 1981, page 158, abstract no. 26058r, Columbus, Ohio, US; S. LAL et al.: "Use of pesticides and natural products in control of Sclerospora sacchari in maize"
- BIOLOGICAL ABSTRACTS, vol. 71, no. 12, 1987, abstract no. 83379, Biological Abstracts, Inc., Philadelphia, PA, US; U.P. SINGH et al.: "The fungicidal effect of neem (Azadirachta indica) extracts of some soil-borne pathogens of gram (Cicer arietinum)"

## Description

This invention relates to a method of controlling fungi on plants with the aid of a foliar fungicide comprising a hydrophobic-solvent extracted neem oil. These neem oil pesticides exhibit inter alia the ability to prevent fungal growth and kill fungal pests at various life stages.

### Description of Prior Art

The neem tree, a tropical evergreen, has been used for centuries as a source of pesticides to which insects have not developed a resistance. Various neem seed extracts, particularly the ones containing the hydrophilic, tetranortriterpenoid azadirachtin, are known to influence the feeding behavior, metamorphosis (insect growth regulating [IGR] effect), fecundity, and fitness of numerous insect species belonging to various orders.

It is known that neem oil, containing azadirachtin, may be mechanically pressed from neem seeds in the cold by using oil presses or may be extracted using alcohols or other solvents using Soxhlet apparatus. Small amounts of neem oil can be obtained by kneading neem seed powder by hand after adding some water. Thus the term 'neem oil' has been used to describe a variety of materials containing a mixture of both hydrophilic and hydrophobic extractables. The variety of extraction methods and resultant variety in composition of neem oil has led to great confusion as to the true properties of "neem oil". Khan and Wassilew, Proc. 3rd Int. Neem Conf., 645-650 (1986) tested the effect of their "neem oil" (prepared by aqueous extraction of neem kernels) on 14 common fungi, including Trichophytonrubrum, T. violaceus, T. concentrichus, T. mentagrophytes, Enidermophyton floccosum, Mierosporum citaneum, Scrophulariopsis brevicaulis, Geotrichum candidum and Fusarium sp and found that it did not inhibit fungal growth and, in fact, the neem oil itself actually contained several species of growing fungi. Yet an anonymous article reported that "10% Neem oil diluted from its emulsifiable concentrate formulation" completely inhibited several species of fungi such as Aspergillus niger, Fusarium moniliforme, Macrophomina phaseolina and Drechslera rostrata. However, the specific details of this formulation were not provided.

Similarly, there are discrepencies in the literature as to the use of neem oil to control insects. Schmutterer and Hallpap, Vol. 1: The Neem Tree, "Effects of Neem on Pests of Vegetable and Fruit Trees", 69-83 (1986) showed that aqueous neem seed extracts are significantly superior to neem oil in repelling leaf mites (Scrobipalpa ergasina), leaf roller (Phycita melogenu) and leaf hopper (Jacobiella facialna). While Mansour et al., Proc. 3rd Int. Neem Conf., 577-587, Nairobi (1986) report that the pentane extract of neem seeds was much more effective at controlling the spider mite Tetranychus cinnabarinus than were ethanol or methanol extracts, but surprisingly, the pentane extract was less effective at controlling the mite, Phytoseiulus persimilis than were the ethanol or methanol extracts.

Yamasaki, et al, Journal of Chromatography, Vol. 447, 277-283 (1988), showed that the tetranortriterpenoid, salannin, can be isolated from crude plant extracts, obtained from Indian neem seeds which are known to be high in salannin content, using hexane. The biological activity of the salannin extract is reported to be feeding deterency and growth inhibition when applied to chewing insects such as beetles and caterpillers.

From Entomology Experimentalis et Applicata, vol. 24, no. 3, 1978, pages 448-450 it is known to use a neem seed extract produced by extraction with hexane. The crude hexane extract of the neem seed is crystallized from an acetone solution, filtered and freed from solvent under reduced pressure and is reported to have insecticidal properties as repellant, reduction of egg deposition. This extract may be used in an aqueous emulsion containing 0.2% Tween 20^{R} as surfactant.

From Phytoparasitica, vol. 11, no. 3/4, 1983, pages 177-185 it is known to use chloroform and pentane extracts of neem seed against carmine spider mite (repellency, reduction of fecundity of adult females). The neem seed is extracted with pentane or chloroform, the resultant mixture is filtered and finally the solvents are evaporated.

However, the use of the neem oil extract (extracted by a non-polar solvent) as foliar fungicide is neither disclosed in the state of the art nor is it derivable therefrom although the principle fungicidal effect of neem seed is known from the state of the art (Biological Abstracts, vol. 71, no. 12, 1987, abstract no. 83379).

It has now been discovered that under the process of this invention, a non-polar hydrophobic-solvent extracted neem oil, substantially free of azadirachtin, possesses the ability to control the growth of serious fungal pathogens. This activity as fungicide in the absence of azadirachtin is novel and unique.

The fungicidal activities of hydrophobicly extracted neem oil is unique and unexpected in view of the absence of any known active ingredients.

### Summary of the Invention

It is an object of this invention to provide a novel pesticide that controls the growth of various fungi.

Another object of this invention is to provide a natural pesticide formulation derived from neem seed extracts for the protection of plants from various fungal pests.

To reach the objects of the invention there is suggested the method according to claims 1 to 6.

In accordance with the present invention, there have been provided certain novel pesticide formulations derived from seed extracts, said formulations comprising non-polar hydrophobic-solvent extracted neem oil fractions, that are substantially free of azadirachtin and salannin.

### Detailed Description

Some active ingredients of the seeds and leaves of the tropical neem tree, Azadirachtin indica, particularly the tetranortriterpenoids azadirachtin and salannin, are known for their potent pesticidal activities. The present invention is directed to various pesticide formulations prepared from neem oil which are substantially free of azadirachtin, and yet said formulations possess the ability to control fungal pathogens.

Neem seeds can be quite variable in size, shape and composition. Seeds from around the world can be as small and round as a pea and as large and long as a bean. Neem seeds consist of two parts, a shell that does not contain oil or pesticidal activity and the kernal which contains oil and azadirachtin. However, the composition of seeds collected from throughout the world varies considerably as shown in Table A. In particular we have found that oil derived from neem trees with high azadirachtin concentration is fungicidal.

**Table A**

| Seeds Source | % Kernal in Seed | % Volatile | Content Oil % | AZAD mg/gsk* |
|---|---|---|---|---|
| Senegal (Pout) | 54 | 7 | 22 | 6.6 |
| India (Punjab) | 55 | 5.8 | 30 | 1.6 |
| Togo (Atkpame) | 57 | 7.3 | 27 | 4.5 |
| Haiti (Arcahie) | 51 | 12.0 | 19 | 2.7 |
| Ghana (Bawk) | 57 | 6.4 | 14 | 3.9 |

| | | | | |
|---|---|---|---|---|
| *gsk = gram seed kernel | | | | |

The pesticide formulations of this invention are prepared from neem oil which has been extracted from, dried, coarsely ground neem seeds with a suitable non-polar, hydrophobic solvent. In accordance with this invention, dried neem seeds, typically containing about 5 to 15% water, are coarsely ground to about 4 mm sieve opening (5 mesh). The ground neem seeds are then extracted with a non-polar hydrophobic solvent to remove neem oil. It is preferred to use a significant excess of solvent ( 3 to 1 w/w) to obtain good yields. The solvent must be suitably hydrophobic to prevent excess water from contaminating the product. Water in the extract will cause azadirachtin to be extracted from the seeds and result in hydrolysis of the extract. After extraction, the solvent is removed from the extract by low temperature evaporation, preferably by vacuum evaporation to yield the neem oil product.

Final pesticide formulations, in accordance with this invention, can be prepared by diluting the neem oil with about 5 to 50% preferably 5 to 20% and most preferably 7 to 15% by volume emulsifying surfactant and may optionally contain 0-1% PABA. Suitable emulsifying surfactants include sorbitan esters, ethoxylated and propoxylated mono and diglycerides, acetylated mono- or diglycerides, lactylated mono- or diglycerides, citric acid esters of mono- or diglycerides, sugar esters, polysorbates, poly-glycerol esters, and the like, and mixtures thereof. The preferred emulsifying surfactants are the polyoxyethylene derivatives of fatty acid partial esters of sorbital anhydrides which are sold under the name Tween® 20, Tween® 40, Tween® 60 and Tween® 80. Prior to final application, these pesticide formulations are typically diluted with water.

For foliar application it has been observed that rates of 0.1 to 10%, preferably 0.25 to 3% neem oil diluted in water is effective for control of insect pests and fungal diseases without unacceptable plant damage. Neem oil may also be used at various dilutions to control various pest and disease problems on turf, horticultural and agricultural crops as well as stored fruits and vegetables. The neem oil formulations have been shown to be effective at controlling fungi such as mildews, rusts, dollar spot, brown patch, black spots, botrytis, and the like.

Suitable non-polar, hydrophobic solvents for use in extracting the neem oil from the ground neem seeds will include those solvents having high neem oil solubility and substantially no azadirachtin or water solubility. The preferred non-polar solvents include, but are not limited to, aliphatic hydrocarbons and halogenated aliphatic hydrocarbons such as pentane, hexane, heptane, octane, nonane, decane, isooctane, chloropentane, chlorohexane, and the like, and their isomers; petroleum distillates, petroleum ether, and the like; aromatics and substituted aromatics such as benzene, toluene, chlorobenzene, benzaldehyde, xylenes, and the like; and mixtures thereof. Various other non-polar solvents having the above characteristics are well known to those skilled in the art, and the choice of a particular solvent is not per se critical to the invention, provided that it is substantially azadirachtin-insoluble and neem oil has a high degree of solubility therein.

### Example 1

This example illustrates the effectiveness of the non-polar, hydrophobic-solvent extracted neem oil formulations of this invention on the Control of Bean Rust
Neem oil was extracted according to the following procedure.

Eighty (80) kgs of dried defruited neem seeds from Africa were ground in a cutting mill to about 2 mm seive opening (10 mesh). The ground seeds were added to a 300 gallon (1136.ℓ) agitated vessel together with 140 gallons (529 ℓ) of hexane and agitated for 18 hours. The extracted seeds were then separated from the hexane-neem oil solution by centrifugation. The hexane-neem oil solution was transferred to a 500 ml jacketed agitated vessel where the solution was heated to 165°F (74°C) to remove the excess hexane. The recovered neem oil had a hexane content of 1%.

The extracted neem oil was mixed with water and diluted to 0.25, 0.5, and 1% and sprayed on the fully expanded primary leaves of beans cv. Pinto 111 until run off. The leaves were then inoculated with bean rust (Uromyces phaseoli) spores and placed in a dew chamber to allow infection. After approximately 16 hours the bean plants were removed from the dew chamber and placed in a greenhouse. After seven (7) days the number of rust pustules were counted. The results, in Table 4, show that the extracted neem oil is an effective foliar fungicide at these concentrations.

**Table 4**

| Treatment | Pustules/100 cm²* | % Control |
|---|---|---|
| Control | 1174.4 a | 0 |
| 0.25% | 220.0 b | 81.1 |
| 0.50% | 116.6 b | 90.2 |
| 1.00% | 114.2 b | 90.2 |

| | | |
|---|---|---|
| * Treatments with same letter are statistically similar; DMRT, P = 0.05 (Probability <95%), N = 6. | | |

### Example 2

### Control of Mildew on Hydrangea

A solution of 2% extracted neem oil in water was sprayed on 5 hydrangias plants growing in greenhouse. The treated plants and an equal number of untreated plants were exposed to the natural mildew microrganisms found in the greenhouse for 6 weeks. At the end of this period the leaves of the plants were examined for mildew infestion. The untreated plants had an average of 46% of their leaves infested while the treated plants had 1.7% infestation.

## Claims

1. A method of controlling fungi on plants comprising contacting the fungi with a neem oil formulation containing 0.1 to 10% of a hydrophobic extracted neem oil which is substantially free of azadirachtin, 0.005 to 5.0% of emulsifying surfactant and 0 to 99% water.

2. The method according to Claim 1 wherein the neem oil formulation contains 0.25 to 3% neem oil.

3. The method according to Claim 1 wherein the fungi are selected from the group consisting of mildews, rusts, leaf spots, dollar spots, brown patch and botrytis.

4. The method of claim 1 wherein the fungi is contacted with the neem oil formulation on the surface of the pla nts.

5. The method of claim 4 wherein the fungi is contacted with the neem oil formulation by spraying.

6. The method of claim 1 wherein the plants are turf, horticultural or agricultural crops.

7. A method for protecting a plant from fungi infestation comprising contacting the plant with a neem oil formulation containing 0.1 to 10 of a hydrophobic extracted neem oil which is substantially free of azadirachtin, 0.005 to 5.0% of emulsifying surfactant and 0 to 99% of water.

8. The method of Claim 7 wherein the plant is contacted with the neem oil formulation by spraying.

9. The method of Claim 7 wherein the plants are turf, horticultural or agricultural crops.

10. The method of Claim 7 wherein the plant is contacted with a fungicidally effective amount of the neem formulation.

## Patentansprüche

1. Verfahren zum Bekämpfen von Fungi an Pflanzen, dadurch gekennzeichnet, daß man die Fungi mit einer Neemölformulierung enthaltend 0,1 bis 10 % eines hydrophoben extrahierten Neemöls, das im wesentlichen frei ist von Azadirachtin, 0,005 bis 5,0 % eines emulgierenden Tensids und 0 bis 99 % Wasser kontaktiert.

2. Verfahren nach Anspruch 1, wobei die Neemölformulierung 0,25 bis 3 % Neemöl enthält.

3. Verfahren nach Anspruch 1, wobei die Fungi ausgewählt sind aus der Gruppe bestehend aus Pilzen der Gattung Erysiphe oder echtem Mehltau (Erysiphe graminis), Pilzen der Gattung Puccinia oder Getreiderostpilzen (Puccinia graminis), Pilzen der Gattung Helminthosporium (Helminthosporium spp.), Pilzen der Gattung Sclerotinia (Sclerotinia homeocarpa), Pilzen der Gattung Rhizoctonia oder Wurzeltötern oder Weißhosigkeit der Kartoffel (Rhizoctonia solani) und Botrytis.

4. Verfahren nach Anspruch 1, wobei man die Fungi mit der Neemölformulierung an der Oberfläche der Pflanzen kontaktiert.

5. Verfahren nach Anspruch 4, wobei man die Fungi mit der Neemölformulierung durch Besprühen kontaktiert.

6. Verfahren nach Anspruch 1, wobei die Pflanzen Rasen, Ernteprodukte aus Garten oder Landwirtschaft sind.

7. Verfahren zum Schützen einer Pflanze vor Pilzbefall, dadurch gekennzeichnet, daß man die Pflanze mit einer Neemölformulierung enthaltend 0,1 bis 10 % eines hydrophobisch extrahierten Neemöls, das im wesentlichen frei von Azadirachtin ist, 0,005 bis 5,0 % emulgierendes Tensid und 0 bis 99 % Wasser kontaktiert.

8. Verfahren nach Anspruch 7, wobei die Pflanze fit der Neemölformulierung durch Sprühen kontaktiert wird.

9. Verfahren nach Anspruch 7, wobei die Pflanze Rasen, Ernteprodukte aus Garten oder Landwirtschaft sind.

10. Verfahren nach Anspruch 7, wobei die Pflanze mit einer fungizid wirksamen Menge der Neemformulierung kontaktiert wird.

## Revendications

1. Méthode de contrôle des champignons sur des plantes comprenant la mise en contact des champignons avec une formulation d'huile de margousier contenant 0,1 à 10% d'une huile de margousier hydrophobe extraite qui est substantiellement exempte d'azadirachtine, de 0,005 à 5,0% d'un surfactant émulsifiant et de 0 à 99% d'eau.

2. Méthode selon la revendication 1, dans laquelle la formulation d'huile de margousier contient 0,25 à 3% d'huile de margousier.

3. Méthode selon la revendication 1, dans laquelle les champignons sont choisis dans le groupe consistant de Erysiphe graminis, Puccinia graminis, Helminthosporium spp., Sclerotinia homeocarpa, Rhizoctonia solani et du botrytis.

4. Méthode selon la revendication 1, dans laquelle les champignons sont mis en contact avec la formulation d'huile de margousier sur la surface des plantes.

5. Méthode selon la revendication 4, dans laquelle les champignons sont mis en contact avec la formulation d'huile de margousier par vaporisation.

6. Méthode selon la revendication 1, dans laquelle les plantes sont du gazon, des cultures horticoles ou agricoles.

7. Méthode de protection d'une plante contre une infection par des champignons comprenant la mise en contact de la plante avec une formulation d'huile de margousier contenant 0,1 à 10% d'une huile de margousier extraite hydrophobe qui est substantiellement exempte d'azadirachtine, 0,05 à 5,0% d'un surfactant émulsifiant et 0 à 99% d'eau.

8. Méthode selon la revendication 7, dans laquelle la plante est mise en contact avec la formulation d'huile de margousier par vaporisation.

9. Méthode selon la revendication 7, dans laquelle les plantes sont du gazon, des cultures horticoles ou agricoles.

10. Méthode selon la revendication 7, dans laquelle la plante est mise en contact avec une quantité efficace fongicidiquement d'une formulation de margousier.
